# EUROPÄISCHE PATENTSCHRIFT

(11) **EP 0 886 630 B1**
(45) Veröffentlichungstag und Bekanntmachung des Hinweises auf die Patenterteilung: **13.06.2001**
(21) Anmeldenummer: 97908222.9
(22) Anmeldetag: 12.03.1997
(51) Int. Cl.: C05F 17/00, C05F 17/02, C02F 1/48

(54) **VERFAHREN ZUR VERROTTUNG KOMPOSTIERBAREN MATERIALS**
METHOD OF ROTTING COMPOSTABLE MATERIAL
PROCEDE DE DECOMPOSITION DE MATERIAU COMPOSTABLE

(30) Priorität: 12.03.1996 DE 19609560
(43) Veröffentlichungstag der Anmeldung: 30.12.1998
(73) Patentinhaber: Loosen, Heinz, 40764 Langenfeld (DE)
(72) Erfinder: Loosen, Heinz, 40764 Langenfeld (DE)
(74) Vertreter: Füssel, Michael
(86) Internationale Anmeldenummer: EP9701254
(87) Internationale Veröffentlichungsnummer: WO9733845

(56) Entgegenhaltungen:
- EP-A- 0 142 473
- EP-A- 0 541 184
- EP-A- 0 599 661
- GB-A- 533 153
- US-A- 4 142 975
- DATABASE WPI Section Ch, Week 9040 Derwent Publications Ltd., London, GB; Class D13, AN 90-300749 XP002032807 & JP 02 211 288 A (NIPPON GIJUTSU KAIH) , 22.August 1990

## Beschreibung

Die vorliegende Erfindung betrifft ein Verfahren nach Oberbegriff von Anspruch 1.

Derartiges Verfahren dürfte allgemein bekannt sein. Bei derartigen Verfahren werden die zu kompostierenden Materialien zunächst einmal zerkleinert und im quasistationären Fließprozeß einer Mischtrommel zugeführt, wo die zu verrottenden Materialien mikrobisch aufgeschlossen werden sollen, um die teilaufgeschlossenen Materialien dann in Mieten unterzubringen.

Demnach unterscheidet sich das vorliegende Verfahren von den bekannten Verfahren der Hauskompostierung bereits durch eine gezielte Verfahrensführung in einem quasistationären Durchlaufprozeß in Kombination mit den Merkmalen vorausgehender Verschredderung und Vorverrottung in einer Mischtrommel.

Die Vorverrottung in einer abgeschlossenen Mischtrommel wird vorteilhafterweise bei Temperaturen deutlich über Umgebungstemperatur geführt. Dies begünstigt die Umsetzungsgeschwindigkeit der Vorverrottung.

Dennoch hat sich gezeigt, daß mit dem bekannten Verfahren die Verrottungszeiten noch relativ lang sind.

Es ist deshalb Aufgabe der Erfindung, das bekannte Verfahren so weiterzubilden, daß die Rottzeiten durch verfahrenstechnische Maßnahmen verkürzt werden.

Diese Aufgabe löst die Erfindung mit den Merkmalen des Anspruchs 1.

Die verkürzten Rottzeiten resultieren aus der besseren Durchmischung der Zwischenprodukte sowie der anaeroben Vor-bzw. Nachbehandlung. In einer speziellen Weiterbildung wird ein Teilstrom vorverrotteten Materials zusätzlich einer aeroben Nachbehandlung unterzogen, bevor der so nachbehandelte Teilstrom erneut einer Verfahrensstufe zugeführt wird. Durch vorgeschaltete und/oder nachgeschaltete anaerobe Denitrierung läßt sich der Stickstoffgehalt beeinflussen.

Aus der Erfindung ergibt sich der Vorteil, daß die während des Prozesses entstandenen Mikroorganismen am Ende einer jeweils vorbestimmten Prozeßstufe entnommen und zu dem Beginn der jeweiligen Prozeßstufe wieder zurückgeführt werden, so daß hierdurch die stets besonders aktiven Mikroorganismen bereits zu Beginn einer jeden Prozeßstufe bereitstehen, um das zu kompostierende Material entsprechend schnell aufschließen zu können.

Dieser Vorteil wird dadurch erreicht, daß das Material zu Beginn einer jeden Prozeßstufe mit dem am Ende dieser Prozeßstufe zur Verfügung stehenden Material zusammengebracht und im wesentlichen homogen durchmischt wird.

Damit können die zurückgeführten Mikroorganismen erneut zum Aufschluß des Prozeßstufenanfangsmaterials verwendet werden.

Es ist demnach insbesondere eine exponentielle Vermehrung der betreffenden Mikroorganismen zu erwarten, woraus abermals ein beschleunigter Verrottungsprozeß resultiert.

Dabei wird davon ausgegangen, daß die jeweilige Wachstumsrate der Mikroorganismen auch abhängig ist vom Nahrungsangebot. Das Nahrungsangebot dürfte im Bereich des jeweiligen Ausgangsmaterials einer Prozeßstufe am höchsten sein, weil die für diese Prozeßstufe zuständigen Mikroorganismen dort noch keinen intensiven Nahrungsstoffabbau durchführen konnten.

Dabei kann insbesondere zu Beginn des Prozeßdurchlaufs das gesamte Produkt zurückgeführt werden, um eine beschleunigte Steigerung der Prozeßgeschwindigkeit bis zur höchstmöglichen Geschwindigkeit zu erzielen.

Berücksichtigt man ferner, daß bestimmte Prozeßschritte bestimmte Verrottungsstadien hervorrufen, so lassen sich diese Verrottungsstadien durch die jeweilige kaskadenartige Materialrückführung schneller erreichen.

Demzufolge ist auch innerhalb kürzerer Prozeßdauer mit einem erhöhten Anteil an prozeßspezifischen Zwischenprodukten zu rechnen.

Hieraus resultiert für die jeweils nachfolgende Prozeß-stufe auch eine erhöhte Sättigung an deren Endprodukten innerhalb einer entsprechend kürzeren Zeit.

Dennoch kann auch hier wieder eine Materialrückführung erfolgen, um auch hier zu einer exponentiellen Umsetzungsgeschwindigkeit zu kommen.

Dabei kommt der Rückführung des Zwischenprodukts am Ende der Mischtrommel besonderes Augenmerk zu, weil in der Mischtrommel die biologisch-chemischen Umsetzungsprozesse hochgradig vielfältig und intensiv ablaufen.

Die in der Mischtrommel ablaufenden Vorgänge sind exotherm, so daß mit der Materialrückführung die Prozeßtemperatur am Beginn der Mischtrommel entsprechend gesteigert werden kann.

Hieraus resultiert erneut eine Verkürzung der Rottzeiten in der Mischtrommel und der evtl. nachfolgenden Prozeß-Stufen.

In einer speziellen Weiterbildung wird einem Teilstrom hinter der Mischtrommel zumindest teilweise eine aerobe Nachbehandlung zuteil. Hierzu werden die Mikroorganismen des vorverrotteten Materials unter Zufuhr von Luft in einem Reaktorgefäß möglichst gut durchmischt, um die zur Verrottung benötigten Mikroorganismen prozeßtechnisch auf ihren Einsatz zu einer vorausgehenden Prozeßstufe vorzubereiten.

Hierzu wird vorgeschlagen, die Durchmischung in einer vorzugsweise vertikalen Strömungsschlaufe zu erzielen, die innerhalb des Reaktorgefäßes in sich geschlossen sein soll. Zusätzlich kann die aerobe Nachbehandlung unter Zufuhr von vorzugsweise physikalisch aufbereitetem Wasser stattfinden. Hierzu wird vorgeschlagen, daß das Wasser mikrobenfreundlich aufbereitet sein soll. Hierauf wird im einzelnen noch eingegangen. Von herausragender Effektivität hat sich erwiesen, wenn der Teilstrom für die aerobe Nachbehandlung zunächst einmal in Feststoff- und Trübwasserstrom getrennt wird. In diesem Fall ist davon auszugehen, daß die aufzubereitenden Mikroorganismen im wesentlichen im Trübwasserstrom schwimmen, welcher verfahrenstechnisch relativ einfach der aeroben Nachbehandlung unterzogen werden kann.

Es handelt sich danach um einen Unterfall der aeroben Nachbehandlung vorverrotteten Materials an sich, wobei durch die Abscheidung des mikrobengesättigten Trübwassers eine weitere Spezifizierung dieses Behandlungsschritts erfolgt.

Vorteilhafte Weiterbildungen der Erfindung ergeben sich aus den Unteransprüchen.

Dabei kommt den Merkmalen des Anspruchs 16 besondere Bedeutung bei.

Durch diese Maßnahmen kann nämlich einerseits ohne weiteres Frisch-, Roh-, oder Abwasser für die Beschleunigung des Prozesses verwendet werden, andererseits wird ein Ausführungsbeispiel für eine Vorrichtung gegeben, mit welcher das Leitungswasser lediglich für die notwendige Prozeßdauer entsprechend beeinflußt wird.

Im folgenden wird die Erfindung anhand von Ausführungsbeispielen näher erläutert. Es zeigen:
- Fig. 1: eine schematisch gezeigte Anlage zur Durchführung des Verfahrens nach dieser Erfindung,
- Fig.2: eine Vorrichtung zur mikrobenfreundlichen Aufbereitung von Wasser im Längsschnitt,
- Fig.3: Darstellung gemäß Fig.2 entlang der Linie III-III,
- Fig.4: ein Mischflügel für die Drehtrommel, und
- Fig.5: einen Anlagenteil zur aeroben Nachbehandlung eines vorverrotteten Teilstroms.
- Fig.6: Gesamtprinzip einer Anlage mit zusätzlicher Nach-denitrierung und Biostufenreaktor gemäß Fig.5.
- Fig.7a, b: Ausführungsbeispiele für geeignete Mischtrommeln
- Fig.8: Weitere Ausführungsbeispiele zu Wasseraufbereitung

Sofern im folgenden nichts anderes gesagt ist, gilt die folgende Beschreibung stets für alle Figuren.

Eine mögliche Anlage zur Durchführung des Verfahrens nach dieser Erfindung besteht aus einem Schredder 1, in welchen das zu kompostierende Material vorausgehend zu im wesentlichen einheitlichen Stückgrößen zerkleinert wird.

Nachdem das Material geschreddert worden ist, kann es dem Vorproduktmischer 2 zugeführt werden, wo ggf. aerobe- oder anaerobe Vorprodukte beigemischt werden können. Hierzu weist der Vorproduktmischer 2 eine vertikal stehende Mischwelle 3 auf, die mit drehfest daran sitzenden Mischflügeln 4 verbunden ist. Durch einen nicht gezeigten Antrieb wird die Mischwelle 3 in Drehung versetzt um das frisch geschredderte Material mit Vorprodukten möglichst homogen zu durchmengen.

Aus dem Vorproduktmischer 2 wird nach dieser Prozeßstufe ein Teilstrom dieses Materials abgezweigt und über die Vor-Denitrierleitung 29 zum anaeroben Denitrierbehälter 5 geführt. Dort wird, wie der Name sagt, das teilabgezweigte Material des Vorproduktmischers 2 denitriert um es anschließend wieder als Teilstrom zu den Vorprodukten zu geben.

Auf diese Weise wird nach der erneuten Zusammenführung ein vorbestimmter Stickstoffanteil im geshredderten Material erzeugt, bevor dieses in die Mischtrommel 6 gegeben wird.

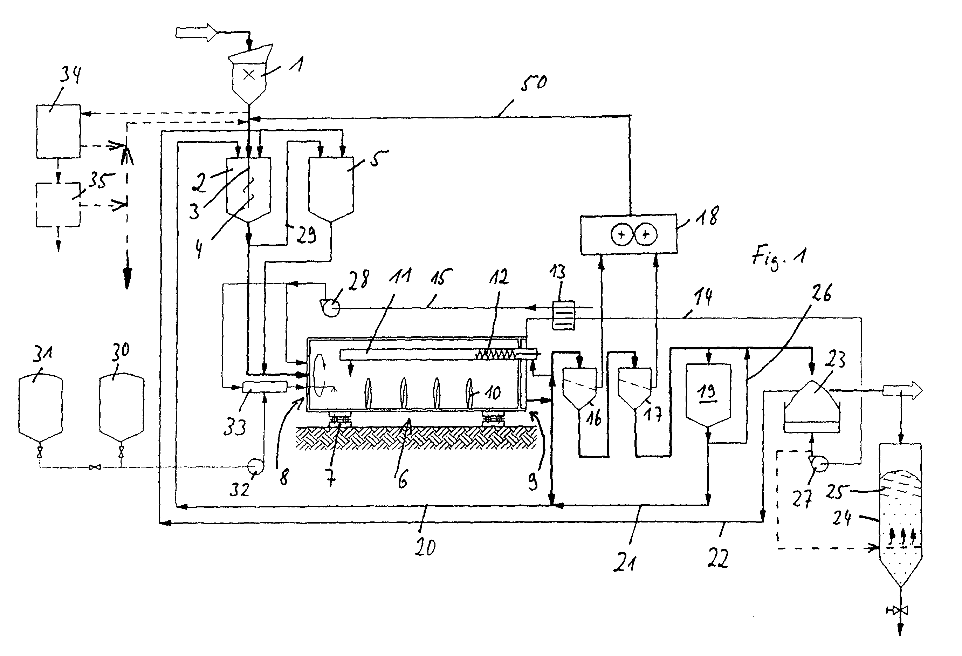

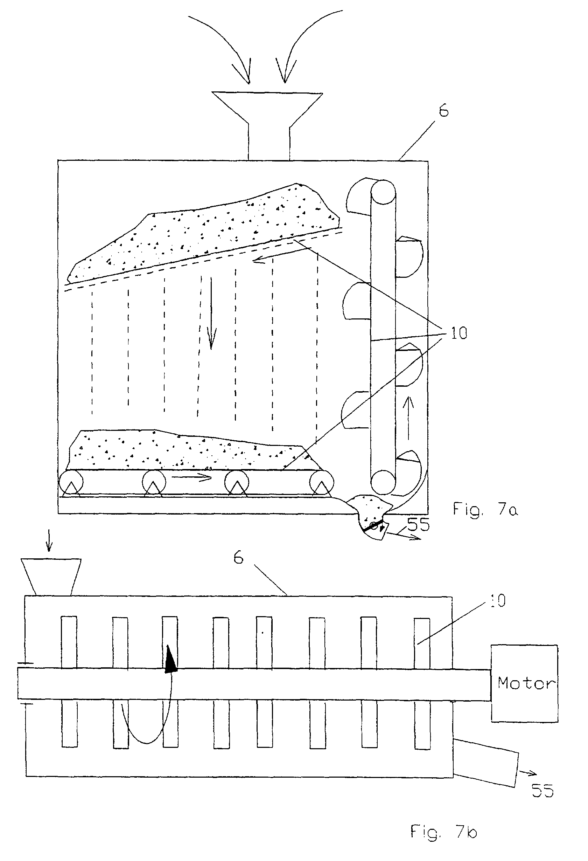

Es läßt sich also bereits hier ein teilaufgeschlossenes Kompostmaterial mit vorbestimmbarem Stickstoffanteil erwarten, welches nun in der Mischtrommel 6 weiter bearbeitet wird. Im Falle der Fig.1 ist die Mischtrommel um eine Achse mit horizontaler Komponente drehbar. Die Durchmischung erfolgt durch starr an der Mischtrommel sitzende Mischflügel 10. Derartige Mischtrommel wird im folgenden als Drehtrommel bezeichnet. Für Mischtrommeln anderer Ausführungen (s. Fig. 7a,b) gilt das folgende entsprechend, mit der Maßgabe, daß anstelle des Begriffs "Drehtrommel" der Begriff "Mischtrommel" zu setzen ist.

Die Drehtrommel 6 ist auf ortsfesten Lagerungen 7 abgestützt und kann sich durch einen geeigneten Antrieb um die horizontalliegende Längsachse mitsamt des darin befindlichen Materials drehen.

Die Trommel selbst ist als geradzylindrische Hohltrommel ausgebildet und an ihren beiden Enden mit Deckeln verschlossen. Am Zuführende 8 dient eine zentrale Öffnung zur kontinuierlichen Zuführung des mit vorbestimmtem Stickstoffgehalt vorbereiteten zu kompostierenden Materials.

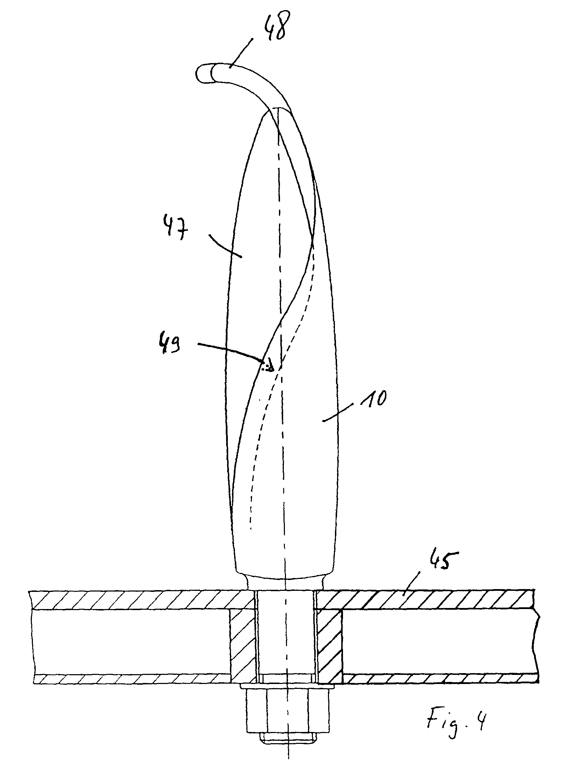

Infolge der zentralen Öffnung am Zuführende 8 kann das Material ununterbrochen in die Drehtrommel 6 eingeleitet werden, wo es sich praktisch gleichmäßig im unteren Bereich der Drehtrommel 6 ansammelt. Während der Drehung durchfahren die starr mit der Drehtrommelwand 45 (siehe Fig.4) verbundenen Mischflügel 10 ständig die im unteren Trommelbereich befindliche Ansammlung des zu kompostierenden Materials und sorgen für eine möglichst homogene Beschaffenheit über die horizontale Lage der Drehtrommel.

Die mikrobiologischen-chemischen Reaktionen innerhalb der Drehtrommel 6 sorgen dort für eine Temperatur die in der Größenordnung von etwa 80° C liegt.

Zur Erzielung der erforderlichen Feuchte dient eine Berieselungsanlage, die über die Wasserkonditionieranlage 33 gespeist wird. Hierauf wird noch eingegangen.

Am Abfuhrende 9 der Trommel kann z.B. ein Deckel angebracht sein, der im äußeren Randbereich durch eine oder mehrere Öffnungen durchbrochen ist. Dabei fahren diese Durchbrechungen immer wieder durch den Bereich der Ansammlung des zukompostierenden Materials und streichen an diesem vorbei.

Da die Zufuhr des zu kompostierenden Materials praktisch kontinuierlich erfolgt, wird über die vorbeistreichenden Durchbrüche am Abfuhrende 9 der Drehtrommel 6 ständig voraufgeschlossenes Kompostiermaterial austreten, welches dann dem Rückförderer 11 zugeführt wird.

Hierzu ist der Rückförderer 11 mit einer Förderschnecke 12 ausgestattet, welche das zurückzuführende Material an den Beginn der Prozeß-Stufe "Drehtrommel" zurückfördert. Dort wird das am Ende der Prozeß-Stufe "Drehtrommel" entnommene Material mit dem Material aus dem Vorproduktmischer 2 zusammengeführt. Die dabei im Material aus dem Vorproduktmischer 2 enthaltenen Nahrungsstoffe werden von den Mikroben des vom Ende dieser Prozeß-Stufe stammenden Materials besonders gierig angenommen, weil das Endmaterial diesbezüglich bereits arm an Nahrungsstoffen ist.

Auf diese Weise wird also erreicht, daß das frisch zugeführte Material innerhalb kürzester Zeit von den Mikroben aufgeschlossen und umgesetzt werden kann.

Die Rückförderschnecke 12 kann dabei kontinuierlich angetrieben werden, wenn der Rückförderer 11 auf geeignete Weise drehbar relativ zum Abführende 9 gelagert ist.

Infolge der erhöhten Temperatur innerhalb der Drehtrommel 6 kann zusätzlich vorgesehen sein, den Wärmeinhalt des entnommenen Materials in einem Wärmetauscher 13 zu entnehmen und in den Prozeß zurückzuführen.

Die hierzu aufgewärmte Luft kann einerseits über eine Wärmerückführungsleitung 15 zu dem Zuführende 8 der Drehtrommel 6 zurückgeführt werden, andererseits ist es aber auch möglich, diese Wärme einem Nachbelüfter 27 zuzuführen, der die warme Luft dann zur Warmhaltung des Rohkomposters 23 verwendet.

Dabei kann insbesondere über das Mengenverhältnis der Luftströme zum Vorbelüfter 28 und zum Nachbelüfter 27 ein bestimmtes Temperaturverhältnis erzielt werden. Es ist also auch eine Optimierung des Verhältnisses aus der Drehtrommeltemperatur und der Rohkomposttemperatur möglich.

Das Temperaturverhältnis wird über das Mengenverhältnis der Luftströme in der Abwärmeleitung 14 und der Wärmerückführungsleitung 15 eingestellt.

Der nicht am Ende der Drehtrommel 6 entnommene Teilstrom wird sodann einem Grobsieb 16 zugeführt, auf welches Grobsieb 16 ein Feinsieb 17 folgen kann.

Ferner kann ein weiterer Teilstrom am Ende der Drehtrommel 6 entnommen und dem Vorproduktmischer 2 zugeführt werden.

Dies bietet den Vorteil, daß bereits weitgehend aufgeschlossenes Material mit dem frisch geshredderten Material homogen durchmengt wird. Auch hier gilt, daß die am Ende der Prozeß-Stufe "Drehtrommel" vorhandenen Mikroben äußerst aktiv an die Zersetzung des noch sehr nahrungsmittelreichen geschredderten Materials herangehen.

Am Ende der Siebstrecke 16,17 steht bereits fein durchsiebtes Material zur Verfügung.

Die Grobstücke, welche durch die Siebe zurückgehalten werden, können einer Mühle 18 zugeführt werden, wo sie noch einmal zermahlen werden.

Das zermahlene Material kann dann über die Mühlenrückführungsleitung 50 zweckmäßigerweise unmittelbar hinter dem Schredder 1 erneut in den Prozeß eingeführt werden, so daß praktisch keinerlei Reststoffe aus dem Prozeß verbleiben.

Der Siebkaskade 16,17 nachgeschaltet ist ein Anaerobbehälter. Hierfür wird vorgeschlagen, das bereits teilaufgeschlossene und fein gesiebte Material einer Verweilzeit zwischen etwa drei und dreißig Tagen auszusetzen, um die Zersetzungsprozesse zu aktivieren.

Aus dem Anaerobbehälter 19 führt eine Anaerobmaterial-Rückführleitung 21 zurück, um auch das Material dieser Prozeß-Stufe einer vorausgehenden Prozeß-Stufe wieder zuführen zu können. Gegebenenfalls kann das anaerob vorbehandelte Material zusammen mit dem Material aus der Drehtrommel in der Trommelmaterial-Rückführung zusammengebracht und dem Vorproduktmischer 2 zugeführt werden.

Das nicht als Teilstrom zurückgeführte anaerob vorbehandelte Material aus dem Anaerobbehälter 19 kann dann auf den Rohkomposter 23 gegeben werden. Auch hier besteht die Möglichkeit, eine Rohkompostmaterialrückführung über die Leitung 22 vorzusehen. Zur Beschleunigung der Rohkompostierung kann der Nachbelüfter entsprechend vorgeheizte Luft über die Abwärmeleitung 14 in den Rohkompost blasen. Es handelt sich, global gesehen, um Rückführung von Anaerobmaterial.

Aus dem Rohkomposter wird das Material dann zu einem Behälter zum Zweck der Nach-Denitrierung 24 geführt. Hierfür empfiehlt es sich insbesondere Wurmkulturen 25 einzusetzen, da derartige Wurmkulturen zu einem erhöhten Nitratabbau im Kompostmaterial führen.

Insgesamt ist also eine Denitrierung über den vorgeschalteten Denitrierbehälter 5, über den nachgeschalteten Anaerobbehälter 19 und über eine Nach-Denitrierung mittels geeigneter Wurmkulturen vorgesehen.

Insbesondere im nachgeschalteten Anaerobbehälter kann infolge der vorgesehenen Verweilzeit zwischen 2 und 30 Tagen ein erhöhter Schadstoffabbau erfolgen.

Zusätzlich kann vorgesehen sein, nicht alles Material über den nachgeschalteten Anaerobbehälter 19 zu führen, sondern lediglich einen Teilstrom.

Am Ausgang dieses Anaerobbehälters kann über die Anreicherungsleitung 26 Material mit bereits erfolgtem erhöhtem Schadstoffabbau dem Ausgangsmaterial zugemischt und mit diesem zusammen auf den Rohkompost gegeben werden.

Es hat sich als zweckmäßig erwiesen, daß dem Durchlaufprozeß vor oder in der Drehtrommel 6 mikrobenfreundlich aufbereitetes Wasser zugeführt wird.

Hierzu dient eine Wasserkonditionieranlage 33. Diese Wasserkonditionieranlage kann verbunden sein mit einem Wasserbehälter 30 -z.B. dem städtischen Wasserversorungsnetz-sowie mit einem Mischflüssigkeitsbehälter 31. Die Flüssigkeiten werden über nicht näher bezeichnete Ventile einer Pumpe 32 zugeführt, welche ihrerseits an die Wasserkonditionieranlage 33 angeschlossen ist.

Das Verhältnis der Flüssigkeiten kann entsprechend dem Bedarf an Grundnährstoffen (N,O,P,S) eingestellt werden. Die Mischflüssigkeit kann beispielsweise hochnitrathaltige Gülle sein oder Molke in Anteilen zwischen Null % und 100% insbesondere solche Stoffe mit hohem Sauerstoffbedarf (biologisch bzw. chemisch).

In jedem Fall weist die Mischflüssigkeit genügend organische Stoffe auf, so daß in der Drehtrommel 6 eine Mitvergärung stattfindet. Prinzipiell kann es auch zweckmäßig sein, das frisch geshredderte Material einem Wäscher 34 zuzuführen um es zu reinigen.

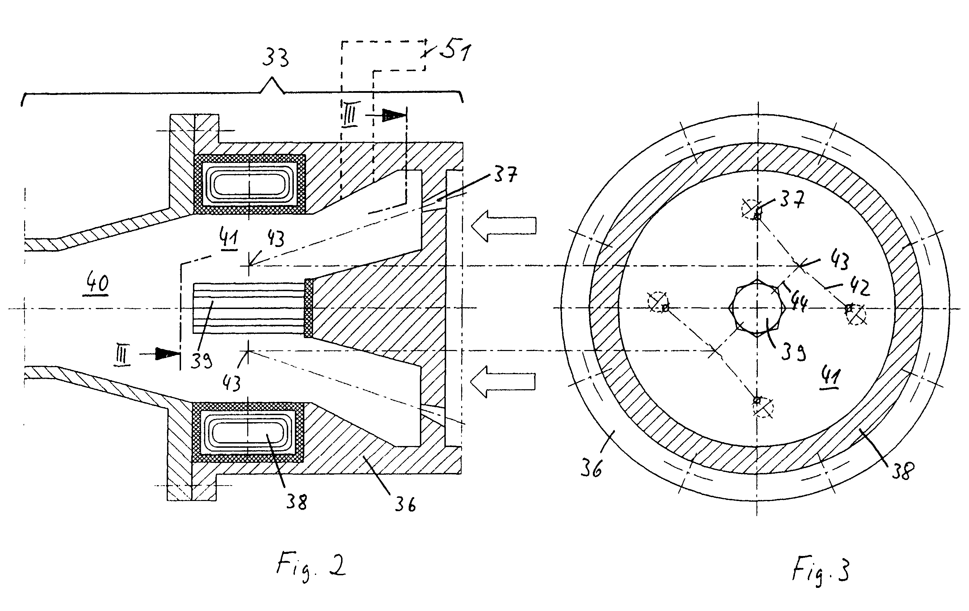

Das hierfür benötigte Wasser kann dann in der Waschwassernachbereitung 35 im wesentlichen von Schlamm- und Schwebstoffen befreit werden. Es ist zwar grundsätzlich empfehlenswert, die Schlamm- und Schwebstoffe dann wieder dem Prozeß zuzuführen. Stellt sich jedoch heraus, daß hier eine unzulässige Schwermetallanreicherung vorliegt, müssen diese Schlamm- und Schwebstoffe gesondert entsorgt werden. Fig.2 zeigt Details zur Wasserkonditionieranlage 33. Eine derartige Wasserkonditionieranlage 33 besitzt ein im wesentlichen rundzylindrisches Gehäuse 36. In einer Bodenscheibe dieses Gehäuses 36 sind Eintrittsbohrungen 37 angebracht. Die Bohrungen verlaufen zur Längsachse des zylindrischen Gehäuses derart geneigt, daß sie in der Eintrittsrichtung konvergent zusammenlaufen. Stromab der Eintrittsbohrungen 37 ist eine ringförmige elektromagnetische Wicklung 38 vorgesehen, die einen entsprechenden Kern 39 in ihrem Zentrum aufweist. Der Kern 39 ist elektromagnetisch gegenüber dem Gehäuse 36 isoliert. Es entsteht folglich zwischen der ringförmigen elektromagnetischen Wicklung 38 und dem Kern 39 ein Rinspalt 41. In diesem Ringspalt 41 liegen die Aufprallstellen 43, an denen die über die Eintrittsbohrungen 37 eintretenden Wasserstrahlen zusammenprallen.

Hierauf wird noch eingegangen.

Stromabwärts der Aufprallpunkte 43 setzt sich das Gehäuse in einen Abflußkanal 40 fort. Dort ist auch der elektromagnetische Kern 39 zu Ende.

Auf einem vorgegebenen Umfang der Bodenscheibe sitzen nun mehrere Eintrittsbohrungen 37. Die Eintrittsbohrungen 37 sind zueinander so geneigt, daß jeweils zwei Eintrittsbohrungen ein Paar von Wasserstrahlen in den Ringraum 41 eintreten lassen, die sich dann dort im Prallpunkt 43 treffen. Der Prallpunkt 43 liegt, wie insbesondere Fig.3 zeigt, außerhalb jeglichen Kontaktbereichs mit der elektromagnetischen Wicklung 38 bzw. dem Kern 39. Dennoch liegt hier ein starkes elektromagnetisches Feld vor. Dies wird dadurch verstärkt, daß der Kern 39 einen polygonalen vorzugsweise in Längsrichtung verdrallten Querschnitt hat. Verbindet man den Kernmittelpunkt mit einem Radialstrahl, der durch eine Polygonecke geht, so liegt auf dessen Verlängerung auch der Prallpunkt 43. Die polygonale Kernausbildung sorgt daher im Bereich der Polygonecke für eine Konzentrierung der magnetischen Feldlinien, so daß die dort auftretenden Wasserstrahlen auch dieser hohen Feldstärke ausgesetzt sind.

Obwohl die diesbezüglichen physikalischen Eigenschaften zur Wasserkonditionierung noch nicht vollständig geklärt sind, kann vermutet werden, daß durch das Zerstäuben von Wasserstrahlen im Bereich hoher magnetischer Feldstärken eine Zertrümmerung und zugleich Homogenisierung der im Wasser befindlichen kristallinen Strukturen erfolgt.

Die Zertrümmerung der kristallinen Strukturen beseitigt diese bewußt nicht. Die kristallinen Strukturen werden jedoch erheblich zerkleinert und begünstigen damit den chemisch biologischen Aufschluß des mit diesem Wasser durchsetzten Kompostiermaterials.

Nach einer gewissen Zeit jedoch finden sich die fein verteilten kristallinen Strukturen wieder zusammen um große Kristallstrukturen zu bilden, so daß auf diese Weise konditioniertes Wasser dann ohne weiteres wieder der Umwelt zugeführt werden kann.

Ferner zeigt Fig.4 ein Ausführungsbeispiel für einen Mischflügel 10.

Derartiger Mischflügel ist starr mit dem Drehtrommelmantel 45 verbunden und weist eine in den Trommelinnenbereich zeigende Mischfläche 47 auf. Endseitig ist am Mischflügel 46 ein Mischhaken vorgesehen, der im wesentlichen in axialer Richtung der Drehtrommel 6 weist. Der Mischhaken sorgt daher für eine Durchmischung in Umfangsrichtung der Drehtrommel, während der längliche Bereich des Mischflügels 10 eine radial ins Innere der Drehtrommel weisende Mischfläche 47 aufweist. Die Mischfläche 47 bewirkt eine axiale Verdrängung des zu durchmischenden Materials, wobei über den schraubenförmig hinterschnittenen Bereich 49 der Mischfläche 47 auch ein gewisser Umgrabeffekt entsteht.

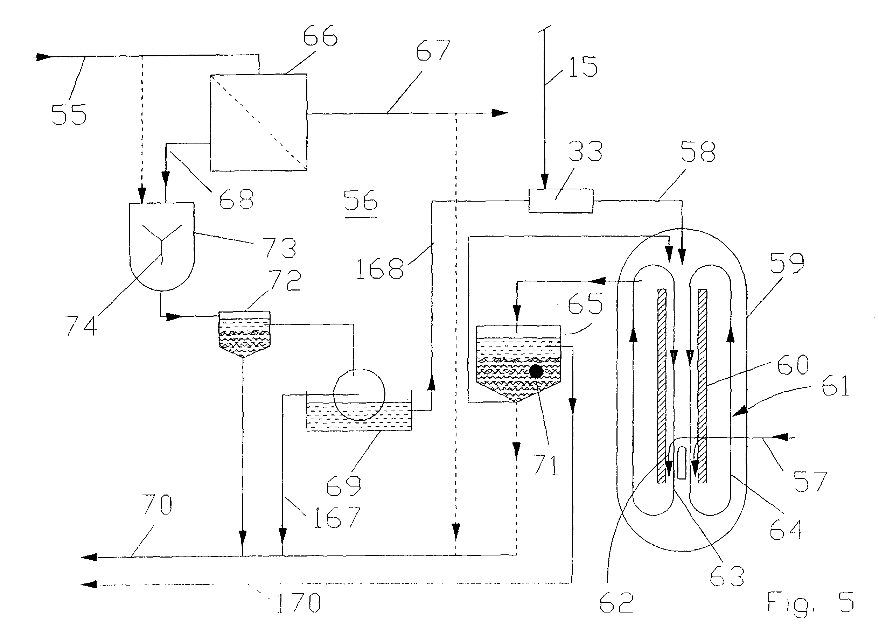

Weiterhin zeigt Fig.5 eine Weiterbildung der Erfindung.

Dort ist ein Anlagenbereich zu sehen, der zur aeroben Nachbehandlung eines vorverrotteten Teilstroms 55 dient. Der vorverrottete Teilstrom wird hinter der Drehtrommel oder jeder anderen Art einer geeigneten Vorverrottung abgezweigt, und wird diesem Anlagenbereich als Teilstrom 55 zugeführt. Dieser Anlagenbereich wird auch als Biostufenreaktor bezeichnet.

Nach einer aeroben Nachbehandlung in der gezeigten aeroben Nachbehandlungsanlage 56 wird der so behandelte Teilstrom 70 zur Drehtrommel zurückgeführt.

Kernstück der aeroben Nachbehandlungsanlage 56 ist das Reaktorgefäß 59. Das Reaktorgefäß 59 verfügt über ein inneres Vertikalrohr 60, in welchem eine Abwärtsströmung 63 des aerob zu behandelnden Teilstroms erzeugt wird.

Aus Kontinuitätsgründen wird die Abwärtströmung 63 außerhalb des inneren Vertikalrohrs 60 in eine Aufwärtsströmung 64 umgelenkt. Es entsteht somit eine in sich geschlossene Strömungsschlaufe 61 innerhalb des Reaktorgefäßes 59, hierdurch läßt sich eine innige Durchmischung des entsprechenden Teilstroms mit Luft bzw. einem Luft-Wasser-Gemisch erzielen. Die Zufuhr des Luft-Wasser-Gemisches erfolgt im inneren Vertikalrohr 60 über eine in der Abwärtsströmung 63 angeordnete Aerobdüse 62. Dort wird ein Luftstrom mit einem Wasserstrom aus vorzugsweise mikrobenfreundlich aufbereitetem Wasser der Abwärtsströmung zugeführt.

Durch die in sich geschlossene Strömungsschlaufe 61 wird bei hoher Mischeffektivität ein hoher Massendurchsatz erzielt. Es ist deshalb auch bei dieser Ausführungsvariante die Integration eines Kompostierungs-Teilprozesses mit den Verfahrensschritten zur mikrobiellen Wasseraufbereitung in einen einzigen stationären Durchlaufprozeß gelungen.

Die Integration erfolgt unter anderem dadurch, daß das Luft-Wasser-Gemisch in der vertikalen Abwärtsströmung 63 zugeführt wird, während ein gleichgroßer Volumenstrom der vertikalen Aufwärtsströmung 64 zur Rückführung in die Drehtrommel entnommen werden kann.

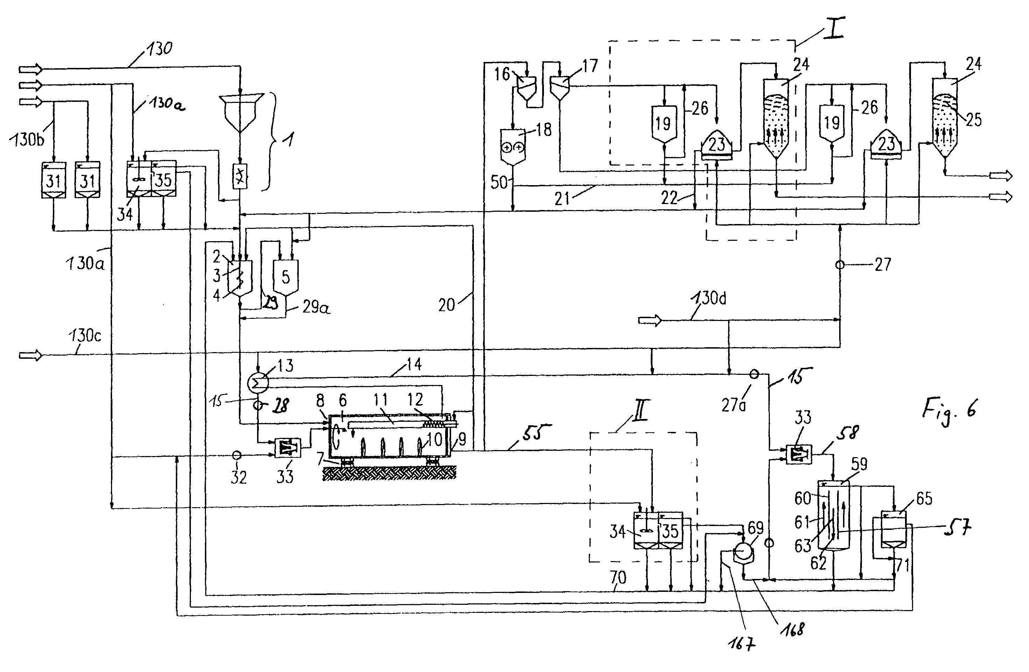

Der entnommene und zurückzuführende Teilstrom kann zunächst einem Absetzbecken 65 zugeführt werden. Für diesen Fall wird vorgeschlagen, diesen Teilstrom einer vorbestimmten Verweilzeit auszusetzen, damit die Mikroorganismen sich vom abgesetzten Überschußschlamm 71 trennen können. Der die Mikroben enthaltende Flüssigkeitsstrom kann dann zur Drehtrommel als Teilstrom 70 zurückgeführt werden, während der Überschußschlamm 71 entnommen und evtl. Weiterverarbeitung zugeführt werden kann. Der Teilstrom 70 kann auch zunächst zum Vorproduktmischer 2 und von dort zur Drehtrommel 6 geführt werden (siehe Fig.6). Ferner zeigt Fig.5 eine weitere Alternative, die mit gestrichelten Linien dargestellt ist. Demnach wird der für die aerobe Nachbehandlung vorgesehen Teilstrom in einem Mikrobentrenner 66 in Feststoffe 67 und mikroorganismen-angereichertes Trübwasser getrennt. In diesem Trübwasserstrom 68 sitzen die begehrten für die aerobe Nachbehandlung vorgesehenen Mikroben.

Das mit Mikroorganismen angereicherte Trübwasser 68 kann nun über einen Filter 69 abermals in Wasser und Feststoffe getrennt werden. Die flüssige Phase wird nun über eine weitere Wasserkonditionieranlage 33 mikrobenfreundlich aufbereitet um dann in dem Schlaufenreaktor 59 mit Luft durchsetzt zu werden.

Weiterhin zeigt Fig.5, daß der Trübwasserstrom 68 in einen Wäscher 73 gebracht werden kann, wo er gegebenfalls zusammen mit dem hinter der Drehtrommel 6 abgezweigten Teilstrom oder einem Teilstrom aus gleichwertiger Vorverrottung durchmischt wird. Hierzu dient ein Mischflügel 74, der im Wäscher 73 angeordnet ist.

Das Resultat wird dann einem Absetzbecken 72 zugeführt, um dort die Feststoffe von der Flotte zu trennen. Die Feststoffe können wiederrum dem Teilstrom 70 zugeführt werden. Die Flotte wird sodann zum Filter 69 geführt. Dort werden über eine Rückführleitung 167 die eingedickten Feststoffe dem Teilstrom 70 zugeschlagen.

Das ausgefilterte Wasser wird dann über die Filtrierwasserzuführung 168 der Wasserkonditionieranlage 33 zugeführt, die darüber hinaus mit der zurückgewonnenen Wärme über die Wärmezufuhrleitung 15 beaufschlagt ist.

Ergänzend hierzu zeigt Fig.6, das bisherige Prinzip jedoch ergänzt um die Anlagenteile I und II.

Anlageteil I entspricht im Prinzip der anaeroben Nach-Denitrierung, wie bereits in Fig. 1 beschrieben. Der Anlagenteil I ist jedoch zusätzlich zur Nach-Denitrierung gemäß Fig.1 vorgesehen, um das Grobmaterial aus Sieb 17 auf eine Grobrotte zu verbringen. Einer Rückführung des Siebrückstandes aus Sieb 17 zur Mühle 18 bedarf es daher in diesem Fall nicht. Es gilt aber das für alle mit identischen Bezugszeichen versehenen Einzelbaugruppen gemäß Fig.1 gesagte sinngemäß auch für die Anlagenteile gemäß Fig.6,I.

Insbesondere ist noch anzumerken, daß im Feinsieb 17 zurückbleibende Feststoffe -im Unterschied zur Rückführung in die Mühle 18 gemäß Fig.1- nunmehr unmittelbar dem Anaerobbehälter 19 zugeführt werden. Es erfolgt daher im Anlageteil gemäß Fig.6,I eine Restnitrateliminiation in den durch das Feinsieb 17 herausgefilterten groben Bestandteilen der Fraktion, während die feinen Bestandteile der Fraktion in einer identischen Anlage gemäß Fig.1 bearbeitet werden. Die beiderseitigen Ausgangsstoffe können dann nach Verlassen der Anlage der Weiterverwendung zugeführt werden.

Ferner zeigt Fig.6 noch, daß im linken oberen Teil des Bildes die Zufuhr zur Anlage aufgetrennt ist in eine Leitung 130 zur Zufuhr biologisch abbaubaren Restmülls, sowie eine Leitung 130a zur Zuführung von Frischwasser/Brauchwasser. Dies wird in einem Wäscher mit geschreddertem Material vermischt und gebenenfalls einer Wassernachbereitung 35 aufgegeben. Jeweils Teilströme können aus dem Wäscher 34 und der Wassernachbereitung 35 entnommen werden um in geeignetem Mischungsverhältnis dann dem Vorproduktmischer zugeführt zu werden.

Dieser Massenstrom kann ferner noch mit einem vorbestimmten Anteil aus schwer biologisch abbaubarer Flüssigkeit, die über die Leitung 130b geführt wird, zusammengebracht werden. Zu diesem Zweck dienen Mischflüssigkeitsbehälter 31, deren Ausgänge dann an die gemeinsame Zuführleitung zu dem Vorproduktmischer 2 angeschlossen sind.

Sollte sich herausstellen, daß der der Drehtrommel 6 entnommene Strom einer zusätzlichen Denitrierung bedarf, empfiehlt es sich, hinter der Mühle 18 einen Teilstrom zu entnehmen und unmittelbar der anaeroben Denitrierung im Denitrierbehälter 5 zuzuführen. Diese Maßnahme macht insbesondere dann Sinn, wenn eine erneute Durchmischung dieses Materials mit dem geschredderten Material ohne weitere Denitrierung vermieden werden soll.

Wie weiterhin Fig.6 zeigt, kann der Wärmetauscher 13 ohne weiteres mit Frischluft über die Leitung 130c versorgt werden.

Der Anlageteil II gemäß Fig.6 zeigt eine weitere Wasseraufbereitung. Hierzu wird der hinter der Drehtrommel abgezweigte Teilstrom 55 zunächst einem Wäscher 34 und dann einer Wassernachbereitung 35 aufgegeben, bevor der so aufbereitete Teilstrom dann dem Filter 69 in Übereinstimmung mit der Darstellung gemäß Fig.5 zugeführt wird. In diesem Falle wird dem Teilstrom 55 im Wäscher 34 auch ein Frischwasser/Brauchwasserstrom aus der Leitung 130a zugeführt, bevor über die Wasserzufuhr die im Teilstrom 55 enthaltenen Mikroben herausgelöst werden können. Die entstandenen Feststoffe können dann wiederum über die Rückführleitung 70 einer Prozeßstufe vor der Drehtrommel zu- oder unmittelbar in die Drehtrommel zurückgeführt werden.

Ergänzend sei noch gesagt, daß hinter dem Schlaufenreaktor 59 ein Absetzbecken 65 vorgesehen werden kann, dessen Feststoffe ebenfalls der Rückführleitung 70 aufgegeben werden, während die Flotte über die Leitung zur Überschußwasserrückführung der Wasserkonditionieranlage 33 vor der Drehtrommel zurückgeführt wird.

Die Fig.7a,b zeigen weitere Ausführungsbeispiele für eine Mischtrommel.

Während in den Ausführungsbeispielen gemäß Fig.1 und 6 die Mischtrommel um eine horizontale Achse drehbar gelagert ist und über starr an ihrer Innenwand sitzende Mischflügel 10 verfügt, zeigt in Abweichung hiervon Fig.6a, daß die Mischtrommel stationär gelagert ist. Die Mischtrommel ist somit als Tankbehälter oder ähnliches anzusehen, in dessen Inneren eine Vorverrottung stattfinden soll, dies kann unter zusätzlicher Luftzufuhr erfolgen. Die Durchmischung innerhalb der Mischtrommel ist allerdings von wesentlicher Bedeutung für die Erfindung. Die Durchmischung wird durch einen Umlaufförderer erzielt, der das Vorverrottungsmaterial innerhalb der stationären Mischtrommel kontinuierlich, zumindest quasi stationär, umwälzt.

Hiervon abweichend zeigt Fig. 7b eine ebenfalls stationäre Mischtrommel. Innerhalb der Mischtrommel ist ein Rührer angeordnet, der sich kontinuierlich, diskontinuierlich oder quasi stationär bewegt um das Vorverrottungsmaterial in möglichst homogenem Durchmischungszustand zu erhalten.

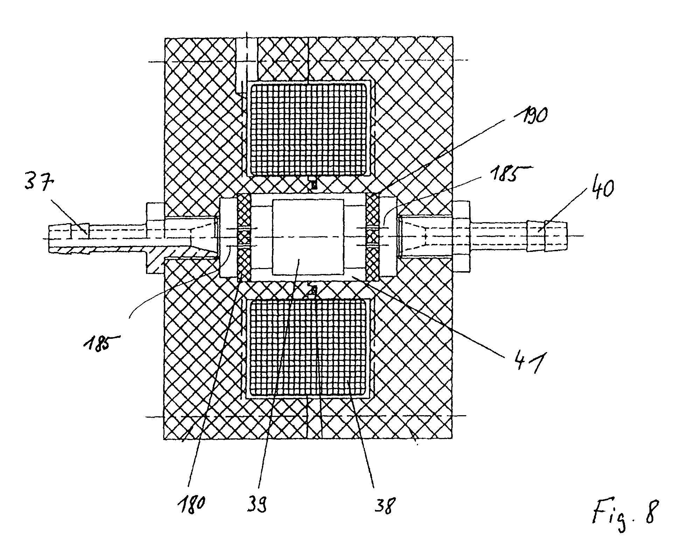

Ferner zeigt Fig. 8 noch ein weiteres Ausführungsbeispiel einer Anlage zur Wasserkonditionierung. Im Prinzip wird auch hier verwirklicht, daß ein Wasserstrahl zerstäubt in einem elektromagnetischen Feld geführt wird und stromabwärts wieder zusammen geführt wird.

Der wesentliche Unterschied bei der Anlage gemäß Fig. 8 besteht darin, daß die Zerstäubung des Wasserstrahls, der über die Eintrittsbohrung 37 eintritt, an einer gelochten Prallplatte 180 erfolgt. Die Prallplatte 180 hat in der Verlängerung der Eintrittsbohrung 37 liegende Löcher 185, welche durch die Prallplatte 180 hindurchgehen und ringförmig im Bereich des elektromagnetischen Feldes im dortigen Ringspalt 41 münden.

Das auftreffende Wasser wird durch die Löcher 185 hindurch geschossen und beim Austritt aus den Löchern zerstäubt. Das zerstäubte Wasser wird dann dem Einfluß des Magnetfeldes ausgesetzt und kann gegebenfalls stromabwärts abermals durch eine zusätzliche Prallplatte 190 getrieben werden, bevor es im Abflußkanal 40 gesammelt wird.

Es soll abschließend noch darauf hingewiesen werden, daß in Folge der relativ hohen angestrebten Temperaturen in der Mischtrommel eine Wärmeisolierung für die Mischtrommel vorgesehen ist, welche die Mischtrommel als Isoliermantel umgibt.

### Bezugszeichenliste:

- 1: Schredder
- 2: Vorproduktmischer
- 3: Mischwelle
- 4: Mischflügel
- 5: anaerober Denitrierbehälter
- 6: Mischtrommel
- 7: Lagerung
- 8: Zuführende
- 9: Abfuhrende
- 10: Mischflügel, Mischvorrichtung, Rührer, Umlaufförderer
- 11: Rückförderer
- 12: Rückförderschnecke
- 13: Wärmetauscher
- 14: Abwärmeleitung
- 15: Wärmerückführungsleitung
- 16: Grobsieb
- 17: Feinsieb
- 18: Mühle
- 19: Anaerobbehälter
- 20: Trommelmaterialrückführung
- 21: Anaerobmaterialrückführung
- 22: Rohkompostmaterialrückführung
- 23: Rohkompost
- 24: Nach-Denitrierung
- 25: Humuswürmer, Wurmkultur
- 26: Anreicherungsleitung
- 27: Nachbelüfter
- 28: Vorbelüfter
- 29: Vor-Denitrierleitung
- 30: Wasserbehälter
- 31: Mischflüssigkeitsbehälter
- 32: Pumpe
- 33: Wasserkonditionieranlage
- 34: Wäscher
- 35: Waschwassernachbereitung
- 36: Gehäuse
- 37: Eintrittsbohrung
- 38: elektromagnetische Wicklung
- 39: Kern
- 40: Abflußkanal
- 41: Ringspalt
- 43: Prallpunkt
- 44: Radialstrahl
- 46: Mischflügel
- 47: Mischfläche
- 48: Mischhaken
- 49: Hinterschnitt
- 50: Mühlenrückführungsleitung
- 51: Luftsangstutzen
- 55: hinter der Drehtrommel abgezweigter Teilstrom
- 56: aerobe Nachbehandlungsanlage
- 57: Luftzufuhr
- 58: Wasserzufuhr
- 59: Reaktorgefäß
- 60: inneres Vertikalrohr
- 61: Strömungsschlaufe
- 62: Aerobdüse
- 63: Abwertströmung
- 64: Aufwertsströmung
- 65: Absetzbecken
- 66: Mikrobentrenner
- 67: Feststoffstrom
- 68: Trübwasserstrom
- 69: Filter
- 70: zur Drehtrommel zurückgeführter Teilstrom
- 71: Überschußschlamm
- 72: Absetzbecken
- 73: Wäscher
- 74: Mischflügel
- 130: biologisch abbaubarer Restmüll
- 130a: Frischwasser/Brauchwasser
- 130b: schwer biologisch abbaubare Flüssigkeit
- 130c: Frischluft
- 130d: Abluft
- 167: Rückführleitung der eingedickten Feststoffe
- 168: Filtrierwasserzuführung
- 170: Überschußwasserrückführung
- 180: Prallplatte
- 185: Loch
- 190: Prallplatte

## Patentansprüche

1. Verfahren zur Verrottung kompostierbaren Materials mit vorausgehender Verschredderung des Ausgangsmaterials und anschließender Zuführung des geschredderten Materialstroms im quasistationären Durchlaufprozeß zu einer Mischtrommel zur Vorverrottung unter erhöhter Temperatur und mit abschließender Verbringung des vorverrotteten Materialstroms zur Verrottung auf Mieten mit den Verfahrensschritten, daß
1.0 der geschredderte Materialstrom in einer ersten Prozeßstufe des Durchlaufprozesses zunächst einer anaeroben Vordenitrierung ausgesetzt wird und daß
1.1 dieser vordenitrierte Materialstrom dann in einer zweiten Prozeßstufe exotherm und aerob in einer Mischtrommel durchmischt und durch einen Vorbelüfter zwangsbelüftet wird und daß
1.2 in einer dritten Prozeßstufe, die hinter der Mischtrommel liegt, der aus der Mischtrommel kommende Materialstrom einer anaeroben Nachbehandlung ausgesetzt wird, wobei
1.3 hinter der zweiten Prozeßstufe und vor der dritten Prozeßstufe aus dem mit den Mikroben der zweiten Prozeßstufe durchsetzten Materialstrom ein Teilstrom abgezweigt und zum Materialstrom vor oder an den Anfang der Mischtrommel zurückgeführt wird, wo
1.4 der zurückgeführte Teilstrom dem dortigen vordenitrierten Materialstrom erneut zugeführt wird.

2. Verfahren nach Anspruch 1, **dadurch gekennzeichnet,** daß die Zwangsbelüfung der Mischtrommel unter erhöhter Temperatur erfolgt, vorzugsweise unter Rückgewinnung der erhöhten Temperatur des Wärmestroms, der die Mischtrommel verläßt.

3. Verfahren nach Anspruch 2, **dadurch gekennzeichnet,** daß ein Teil des Wärmestroms, der die Mischtrommel verläßt, zur Nachbelüftung eines der Mischtrommel nachgeordneten Rohkomposters verwendet wird.

4. Verfahren nach Anspruch 2, **dadurch gekennzeichent,** daß das Temperaturverhältnis zwischen Vorbelüfter und Nachbelüfter einstellbar ist.

5. Verfahren nach einem der Ansprüche 1 bis 4, **dadurch gekennzeichnet,** daß hinter der Drehtrommel ein Teilstrom abgezweigt und zum vorderen Ende der Drehtrommel zurückgeführt wird.

6. Verfahren nach Anspruch 5, **dadurch gekennzeichnet,** daß die Zurückführung innerhalb der Drehtrommel erfolgt.

7. Verfahren nach einem der Ansprüche 1 bis 6, **dadurch gekennzeichnet,** daß zwischen Shredder und Drehtrommel eine aerobe und/oder anaerobe Vorbehandlung erfolgt.

8. Verfahren nach Anspruch 7, **dadurch gekennzeichnet,** daß hinter der Drehtrommel ein Teilstrom abgezweigt und vor der Prozeßstufe der aeroben und/oder anaeroben Vorbehandlung wieder zugeführt wird.

9. Verfahren nach Anspruch 7 oder 8, **dadurch gekennzeichnet,** daß zur aeroben und/oder anaeroben Vorbehandlung aerobe und/oder anaerobe Vorprodukte zugeführt werden, und daß eine kontinuierliche Durchmischung der aeroben oder anaeroben Vorprodukte mit dem geshredderten Material erfolgt.

10. Verfahren nach einem der Ansprüche 1 bis 9, **dadurch gekennzeichnet,** daß hinter der Drehtrommel eine Durchsiebung erfolgt, und daß das vom Sieb zurückbehaltene Material kleingemahlen und dem Durchlaufprozeß vor der Drehtrommel zugeführt wird.

11. Verfahren nach Anspruch 10, **dadurch gekennzeichnet,** daß das kleingemahlene Material vor der Drehtrommel eine aerobe und/oder anaerobe Vorbehandlung erfährt.

12. Verfahren nach einem der Ansprüche 1 bis 11, **dadurch gekennzeichnet,** daß dem zu kompostierenden Material hinter der Drehtrommel Wärme entzogen und daß die Wärme dem Prozeß vor der Drehtrommel wieder zugeführt wird.

13. Verfahren nach einem der Ansprüche 1 bis 12, **dadurch gekennzeichnet,** daß dem Durchlaufprozeß vor oder in der Drehtrommel mikrobenfreundlich aufbereitete Flüssigkeit zugeführt wird.

14. Verfahren nach Anspruch 1 bis 12, **dadurch gekennzeichnet,** daß dem Durchlaufprozeß vor oder in der Drehtrommel eine aerobe Flüssigkeit zugeführt wird.

15. Verfahren nach Anspruch 13 oder 14, **dadurch gekennzeichnet,** daß ein Flüssigkeitsstrahl in ein elektromagnetisches Feld geführt und dort durch Aufprall zerstäubt und der zerstäubte Flüssigkeitsstrahl stromabwärts wieder zusammengeführt wird.

16. Verfahren nach Anspruch 15, **dadurch gekennzeichnet,** daß die Aufprallzerstäubung mechanisch berührungslos und lediglich durch Zusammenprall mit einem weiteren Flüssigkeitsstrahl erfolgt.

17. Verfahren nach Anspruch 16, **dadurch gekennzeichnet,** daß die Flüssigkeitsstrahlen unter einem spitzen Winkel zum Prallpunkt gerichtet sind.

18. Verfahren nach Anspruch 13, **dadurch gekennzeichnet,** daß der Flüssigkeit mitvergärende Zumischflüssigkeit zugeführt wird.

19. Verfahren nach einem der Ansprüche 1 bis 18, **dadurch gekennzeichnet,** daß hinter der Drehtrommel, vorzugsweise nach vorausgehender Siebung eine Zwischenlagerung von etwa drei bis dreißig Tagen im wesentlichen unter Luftabschluß erfolgt.

20. Verfahren nach einem der Ansprüche 1 bis 19, **dadurch gekennzeichnet,** daß das geshredderte Material vor der Drehtrommel durch eine Waschanlage geführt wird.

21. Verfahren nach Anspruch 20, **dadurch gekennzeichnet,** daß in einem nachgeschalteten Wasseraufbereitungsgerät die Schwebstoffe vom Wasser getrennt werden und entweder dem Prozeß zugeführt oder gesondert entsorgt werden.

## Claims

1. Process of decomposing compostable material with preceding shredding of the starting material and subsequent conveyance of the flow of shredded material in the quasi-stationary passage process to a mixing drum for preliminary decomposition at increased temperature, with subsequent transfer of the flow of preliminarilydecomposed material for decomposition in heaps, having the process stages that
1.0 the flow of shredded material is firstly subjected to anaerobic preliminary denitration in a first process stage of the passage process and that
1.1 this flow of preliminarily-denitrated material is then thoroughly mixed exothermically and aerobically in a mixing drum in a second process stage and is forcibly aerated by a preliminary aeration device and that
1.2 in a third process stage, downstream of the mixing drum, the flow of material leaving the mixing drum is subjected to subsequent anaerobic treatment, wherein
1.3 after the second process stage and before the third process stage, a partial flow is branched off from the flow of material interspersed with the microbes from the second process stage, and this partial flow is returned to the flow of material upstream of or at the entrance to the mixing drum, where
1.4 the returned partial flow is again supplied to the flow of preliminarily-denitrated material located at this point.

2. Process according to claim 1, characterised in that the forcible aeration of the mixing drum takes place at increased temperature, preferably with recovery of the increased temperature of the heat flow leaving the mixing drum.

3. Process according to claim 2, characterised in that a part of the heat flow which leaves the mixing drum is used for subsequent aeration of a raw materials composter disposed downstream of the mixing drum.

4. Process according to claim 2, characterised in that the temperature ratio between the preliminary aeration device and the subsequent aeration device can be adjusted.

5. Process according to one of claims 1 to 4, characterised in that downstream of the rotating drum a partial flow is branched off and returned to the front end of the rotating drum.

6. Process according to claim 5, characterised in that the return supply takes place within the rotating drum.

7. Process according to one of claims 1 to 6, characterised in that between the shredder and the rotating drum an aerobic and/or anaerobic preliminary treatment takes place.

8. Process according to claim 7, characterised in that downstream of the rotating drum, a partial flow is branched off and returned upstream of the process stage of the aerobic and/or anaerobic preliminary treatment.

9. Process according to claim 7 or 8, characterised in that aerobic and/or anaerobic preliminary products are supplied for the aerobic and/or anaerobic preliminary treatment, and that the aerobic or anaerobic preliminary products are continuously thoroughly mixed with the shredded material.

10. Process according to one of claims 1 to 9, characterised in that downstream of the rotating drum a screening process takes place, and that the material retained by the screen is finely ground and supplied to the passage process upstream of the rotating drum.

11. Process according to claim 10, characterised in that the finely ground material undergoes aerobic and/or anaerobic preliminary treatment upstream of the rotating drum.

12. Process according to one of claims 1 to 11, characterised in that heat is extracted from the material to be composted downstream of the rotating drum and that the heat is returned to the process upstream of the rotating drum.

13. Process according to one of claims 1 to 12, characterised in that liquid prepared to be hospitable to microbes is supplied to the passage process upstream of or in the rotating drum.

14. Process according to claim 1 to 12, characterised in that an aerobic liquid is supplied to the passage process upstream of or in the rotating drum.

15. Process according to claim 13 or 14, characterised in that a jet of liquid is supplied into an electromagnetic field and is there atomised by impact and the atomised jet of liquid is made to converge again downstream.

16. Process according to claim 15, characterised in that the impact atomisation takes place without mechanical contact and only by collision with a further jet of liquid.

17. Process according to claim 16, characterised in that the liquid jets are directed towards the impact point at an acute angle.

18. Process according to claim 13, characterised in that co-fermenting admix liquid is supplied to the liquid.

19. Process according to one of claims 1 to 18, characterised in that downstream of the rotating drum, preferably after previous screening, an intermediate storage of three to thirty days takes place with air being substantially excluded.

20. Process according to one of claims 1 to 19, characterised that the shredded material is passed through a washing installation upstream of the rotating drum.

21. Process according to claim 20, characterised in that in a water preparation device connected downstream, the suspended substances are separated from the water and either supplied to the process or disposed of separately.

## Revendications

1. Procédé pour la décomposition d'un matériau apte à être transformé en compost, avec un déchiquetage préalable du matériau de départ, puis l'amenée du courant de matériau déchiqueté, selon un processus continu quasi stationnaire, vers un tambour mélangeur en vue d'une décomposition préalable à haute température, et enfin le transfert du courant de matériau, préalablement décomposé, en vue de sa décomposition dans des tas, comportant les étapes suivantes :
1.0 lors d'une première étape du processus continu, le courant de matériau déchiqueté est tout d'abord soumis à une dénitration préalable anaérobie,
1.1 lors d'une deuxième étape, ce courant de matériau ayant subi une dénitration préalable est soumis à un mélange exothermique et aérobie dans un tambour mélangeur, et à une aération forcée grâce à un pré-aérateur, et
1.2 lors d'une troisième étape, située derrière le tambour mélangeur, le courant de matériau venant de celui-ci est soumis à un retraitement anaérobie, étant précisé
1.3 qu'après la deuxième étape et avant la troisième étape, une partie du courant de matériau mélangé aux micro-organismes de la deuxième étape est déviée et recyclée dans le courant de matériau situé avant ou au début du tambour mélangeur, où
1.4 le courant partiel recyclé est ramené dans le courant de matériau situé à cet endroit et ayant subi une dénitration préalable.

2. Procédé selon la revendication 1, **caractérisé** en ce que l'aération forcée du tambour mélangeur a lieu à une température élevée, de préférence avec une récupération de la température élevée du flux thermique qui sort du tambour mélangeur.

3. Procédé selon la revendication 2, **caractérisé** en ce qu'une partie du flux thermique qui sort du tambour mélangeur est utilisée pour l'aération ultérieure d'un dispositif de compostage brut monté en aval du tambour mélangeur.

4. Procédé selon la revendication 2, **caractérisé** en ce que le rapport de température entre le pré-aérateur et le post-aérateur est réglable.

5. Procédé selon l'une des revendications 1 à 4, **caractérisé** en ce qu'un courant partiel est dévié après le tambour rotatif et est ramené à l'extrémité avant de celui-ci.

6. Procédé selon la revendication 5, **caractérisé** en ce que le recyclage a lieu à l'intérieur du tambour rotatif.

7. Procédé selon l'une des revendications 1 à 6, **caractérisé** en ce qu'un traitement préalable aérobie et/ou anaérobie a lieu entre le dispositif de déchiquetage et le tambour rotatif.

8. Procédé selon la revendication 7, **caractérisé** en ce qu'un courant partiel est dévié après le tambour rotatif et est ramené avant l'étape du traitement préalable aérobie et/ou anaérobie.

9. Procédé selon la revendication 7 ou 8, **caractérisé** en ce que des premiers produits aérobies et/ou anaérobies sont amenés vers le traitement préalable aérobie et/ou anaérobie, et en ce qu'un mélange continu de ces premiers produits aérobies ou anaérobies a lieu avec le matériau déchiqueté.

10. Procédé selon l'une des revendications 1 à 9, **caractérisé** en ce qu'un criblage a lieu après le tambour rotatif, et en ce que le matériau retenu par le crible est broyé et amené vers le processus continu avant le tambour rotatif.

11. Procédé selon la revendication 10, **caractérisé** en ce que le matériau broyé subit un traitement préalable aérobie et/ou anaérobie avant le tambour rotatif.

12. Procédé selon l'une des revendications 1 à 11, **caractérisé** en ce que derrière le tambour rotatif, de la chaleur est extraite du matériau à transformer en compost, et en ce que la chaleur est recyclée avant le tambour rotatif.

13. Procédé selon l'une des revendications 1 à 12, **caractérisé** en ce qu'un liquide traité pour ne pas nuire aux micro-organismes est amené dans le processus continu avant ou dans le tambour rotatif.

14. Procédé selon les revendications 1 à 12, **caractérisé** en ce qu'un liquide aérobie est amené dans le processus continu avant ou dans le tambour rotatif.

15. Procédé selon la revendication 13 ou 14, **caractérisé** en ce qu'un jet de liquide est amené dans un champ électromagnétique et se pulvérise à cet endroit sous l'action de l'impact, et le jet de liquide pulvérisé est reconstitué en aval.

16. Procédé selon la revendication 15, **caractérisé** en ce que la pulvérisation par impact se fait mécaniquement sans contact et simplement sous l'action de la collision avec un autre jet de liquide.

17. Procédé selon la revendication 16, **caractérisé** en ce que les jets de liquides sont orientés suivant un angle aigu par rapport au point d'impact.

18. Procédé selon la revendication 13, **caractérisé** en ce qu'un liquide d'adjonction fermentescible est amené dans le liquide.

19. Procédé selon l'une des revendications 1 à 18, **caractérisé** en ce qu'il prévoit après le tambour rotatif, de préférence après un criblage préalable, un stockage provisoire d'environ trois à trente jours pratiquement à l'abri de l'air.

20. Procédé selon l'une des revendications 1 à 19, **caractérisé** en ce que le matériau déchiqueté traverse une installation de lavage avant le tambour rotatif.

21. Procédé selon la revendication 20, **caractérisé** en ce que dans un appareil de traitement de l'eau monté en aval, les matières en suspension sont séparées de l'eau et sont soit recyclées dans le processus, soit évacuées séparément.
